Europäisches Patentamt

European Patent Office

Office européen des brevets

(11) Veröffentlichungsnummer: **0 423 611 A1**

## EUROPÄISCHE PATENTANMELDUNG

(21) Anmeldenummer: 90119448.0

(22) Anmeldetag: 10.10.90

(51) Int. Cl.5: **C09D 5/34, C08J 3/00**

(30) Priorität: 19.10.89 DE 3934870
02.08.90 DE 4024553

(43) Veröffentlichungstag der Anmeldung:
24.04.91 Patentblatt 91/17

(84) Benannte Vertragsstaaten:
GR

(71) Anmelder: Henkel Kommanditgesellschaft auf Aktien
Postfach 1100 Henkelstrasse 67
W-4000 Düsseldorf-Holthausen(DE)

(72) Erfinder: **Loth, Helmut**
**Ursula-Strasse 17**
**W-4300 Essen(DE)**
Erfinder: **Knop, Bernhard, Dr.**
**Robert-Koch-Strasse 10**
**W-4019 Monheim(DE)**
Erfinder: **Podola, Tore**
**Deusser Strasse 31**
**W-4109 Monheim(DE)**
Erfinder: **Helpenstein, Klaus**
**Flurstrasse 25**
**W-4050 Mönchengladbach(DE)**

(54) **Früh regenfeste Fugendichtungsmassen.**

(57) Beschrieben werden frühregenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl und Hydroxypropylcellulose gebildeten Gruppe
- Füllstoffe sowie
- gegebenenfalls übliche Zusätze wie Pigmente, Weichmacher, Extender, Verdickungsmittel, Entschäumer, Dispergierhilfsmittel, pH-Regulatoren sowie Konservierungs- und Alterungsschutzmittel
und herstellbar durch inniges Vermengen von (I) mit den übrigen Bestandteilen. Um (II) in Mengen einbringen zu können, die über der Löslichkeitsgrenze liegen, sind die Fugendichtungsmassen dadurch gekennzeichnet, daß (II) in retardierter Form abgemischt mit den Füllstoffen zugegeben und untergemischt wird.

EP 0 423 611 A1

# FRÜH REGENFESTE FUGENDICHTUNGSMASSEN

Die Erfindung betrifft früh regenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe
- Füllstoffe sowie
- gegebenenfalls übliche Zusätze wie Pigmente, Weichmacher, Extender, Verdickungsmittel, Entschäumer, Dispergierhilfsmittel, pH-Regulatoren sowie Konservierungs und Alterungsschutzmittel
und herstellbar durch inniges Vermengen von (I) mit den übrigen Bestandteilen sowie ein Verfahren zur Herstellung derartiger Fugendichtungsmassen und deren Verwendung.

Fugendichtungsmassen sind dem Fachmann bekannt und haben sich in der Praxis bewährt. Problematisch ist der Einsatz von Fugendichtungsmasse in Bereichen wo die Möglichkeit bzw. die Gefahr besteht, daß die Fugendichtungsmasse vor dem Aushärten einer Wasserbelastung z.B. durch Spritzwasser oder Regen ausgesetzt ist. So werden viele der bislang auch im Außenbereich verwendeten Fugendichtungsmassen durch einen kurz nach ihrem Auftragen einsetzenden heftigen Regenguß ganz oder teilweise ausgewaschen. Aus der DE 38 14 078-A-1 ist die Verwendung von nicht-ionischen Celluloseethern in Fugendicht- bzw. Beschichtungsmassen auf Basis von Acrylatdispersionen bekannt. Durch den Einsatz von bestimmten Celluloseethern in diesen Massen soll das Auswaschverhalten durch die Einwirkung von Wasser wie Regenwasser sowie das Glättverhalten verbessert werden. Die dort eingesetzten Mengen der angegebenen Celluloseethertypen sind auf den Festkörpergehalt der Acrylatdispersion bezogen. Es wird keine explizite Angabe über das Verhältnis von "freiem" Wasser zu den Celluloseethern gemacht. Aus den Beispielen geht zwar hervor, daß die dort aufgeführten Bestandteile zur Herstellung einer Fugendichtungsmasse in einem Planetenmischer hergestellt wurden, jedoch findet man keine Angaben darüber, in welcher Form und Reihenfolge die einzelnen Bestandteile miteinander in Mischung gebracht werden.

Es hat sich jedoch in der Praxis erwiesen, daß bei derartigen frühregenfesten Fugendichtungsmassen die Zugabe der einzelnen Bestandteile sowie deren Form bei der Herstellung der Fugendichtungsmassen nicht beliebig ist. So lassen sich beispielsweise die genannten Celluloseether zwar im Labormaßstab in geringen Mengen in einige Polymerdispersionen einstreuen und lösen, jedoch nicht im Produktionsmaßstab und nicht in solchen Mengen, die bezogen auf das "freie" Wasser zu groß sind um eine vollständige Lösung zu erzielen. Bei einem solchen Versuch erhält man unweigerlich Klumpenbildung bzw. Brechen der Dispersion. Wenn es auch manchmal möglich ist, die Celluloseetherklumpen wieder zu homogenisieren, so ist es nicht machbar, einmal koagulierte Dispersionsteilchen wieder zu dispergieren. Auch bietet die DE 38 14 078-A-1 dem Fachmann keinen Hinweis darauf, daß derartige frühregenfeste Fugendichtungsmassen mit anderen wäßrigen Polymerdispersionen als den dort angegebenen Acrylatdispersionen herstellbar sind.

Nicht-ionische Celluloseether sind auch als Bestandteile von Beschichtungsmassen und Anstrichmitteln bekannt z.B. solchen auf Basis von wäßrigen Dispersionen von Organo-Polysiloxanen wie in der DE 12 84 007 beschrieben oder solchen auf Basis von Vinylacetat/Maleinsäuredibutylesterdispersionen wie in der DE 21 08 365 beschrieben. Dem kann der Fachmann jedoch keinen Hinweis entnehmen, daß derartige Celluloseether auch für Fugendichtungsmassen auf gleicher Polymerdispersionsbasis geeignet sind und zu den gewünschten Effekten führen.

In der Fachzeitschrift Resin Review 35 ,2 ist eine Dachbeschichtungsmasse beschrieben, die als Bindemittel eine Polyacrylatdispersion und neben Füllstoffen und weiteren Hilfsstoffen auch Hydroxyethylcellulose als Verdickungsmittel enthält. Diese Beschichtungsmasse wird als besonders auswaschresistent ausgelobt. Diese Eigenschaft wird jedoch auf das spezifische Abbindeverhalten der speziell für derartige Beschichtungsmassen entwikkelten und eingesetzten Polyacrylatemulsionen zurückgeführt. Somit hat es für den Fachmann nicht nahegelegen, Hydroxyethylcellulose zur Verbesserung der Frühregenfestigkeit in Fugendichtungsmassen einzusetzen.

Darüber hinaus erfüllen Beschichtungsmassen nicht die Ansprüche, die an Fugendichtungsmassen gestellt werden. Dies sind insbesondere Anforderungen wie sie durch die DIN 52456 "Bestimmung der Verarbeitbarkeit von Dichtstoffen" sowie die DIN 52454 "Standvermögen" gefordert werden.

Insbesondere beim Standvermögen müssen Fugendichtungsmassen gegenüber den Beschichtungsmassen die Eigenschaft aufweisen, aus einem mit dieser Masse gefüllten U-Profil, welches nach dem Füllen in die Senkrechte gestellt wird, nicht oder nur geringfügig abzulaufen. Beschichtungsmassen sind in aller Regel niedrig-viskoser, da sie einerseits durch Spritzen oder Rollen auftragbar sein sollen und andererseits einen gewissen Verlauf zur Nivellierung der Masse zeigen sollen. Zwar kann man Fugendichtungsmassen als auch Beschichtungsmassen im Prinzip aus den gleichen Bestandteilen herstellen, auch sollte es möglich sein, durch Verdünnen einer Fugendichtungsmasse eine halbwegs brauchbare Beschichtungsmasse herzustellen, aber es lassen sich nicht zwingend in umgekehrter Weise Rückschlüsse ziehen.

Aus Ullmann, Enzyklopädie der technischen Chemie, 4. Auflage, Band 9, Verlag Chemie, Weinheim/Bergstraße 1974, Seite 208 - 209, ist bekannt, daß nichtionische Celluloseetherderivate wie Hydroxyethylcellulose (HEC), Hydroxyethylmethylcellulose (HEMC) und Hydroxypropyl-methylcellulose (HPMC) in Kunststoffputzen und Dispersionsfarben u.a. zur Verbesserung des Wasserrückhaltevermögens, der Offenzeit, der Naßhaftung sowie des Andick- und Abbindeverhaltens eingesetzt werden. Dem kann jedoch der Fachmann keinen Hinweis darauf entnehmen, daß derartige Celluloseether in Fugendichtungsmassen zu einer Verbesserung der Streichfähigkeit, des Glättverhaltens und der Spritzwasserbeständigkeit der noch nicht erhärteten Oberflächen dieser Massen führen. Desweiteren repräsentieren Anstrichstoffe wie Dispersionsfarben sowie Kunststoffmörtel einen anderen Bereich der Technik, der nicht mit Fugendichtungsmassen vergleichbar ist. So lassen sich zwar Kunststoffputze möglicherweise zum Verfüllen von Fugen einsetzen, weisen jedoch im allgemeinen keine ausgesprochenen Dichtungseigenschaften aus und lassen sich im Gegensatz zu den Fugendichtungsmassen bei ihrer Applikation mit der Kelle portionieren und verarbeiten.

Aufgabe der Erfindung ist es, Fugendichtungsmassen auf Basis von Polymerdispersionen zur Verfügung zu stellen, die neben einem guten Glättverhalten eine Frühregenfestigkeit der nicht ausgehärteten Massen aufweisen, ohne daß andere erwünschte Eigenschaften wie Elastizitätsmodul, Bruchdehnung und Rückstellvermögen sowie Migrationsbeständigkeit und Koagulat- und Stippenfreiheit davon beeinträchtigt werden. Es war darüber hinaus Aufgabe der Erfindung, ein Verfahren bereitzustellen, das es möglich macht, derartige Massen zu produzieren.

Die Aufgabe wurde gelöst durch frühregenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe
- Füllstoffe sowie
- gegebenenfalls übliche Zusätze wie Pigmente, Weichmacher, Extender, Verdickungsmittel, Entschäumer, Dispergierhilfsmittel, pH-Regulatoren sowie Konservierungs- und Alterungsschutzmittel und herstellbar durch inniges Vermengen von (I) mit den übrigen Bestandteilen, dadurch gekennzeichnet, daß (II) in retardierter Form abgemischt mit den Füllstoffen zugegeben und untergemischt wird.

Die einzelnen Bestandteile der Fugendichtungsmasse sind dem Fachmann als solche bekannt z.B. aus der DE 38 14 078-A-1. Weitere geeignete Polymerdispersionen für die Herstellung von Fugendichtungsmassen sind im Handel erhältlich und/oder sind dem Fachmann aus der Patent- und Fachliteratur bekannt z.B. aus E. Flick, Construction and struc tural adhesives and sealants, Noyes Publications, Park Ridge 1988 oder E. Flick, Adhesives and sealant compound formulations, Noyes Publications, Park Ridge 1978. Besonders vorteilhafte Fugendichtungsmassen enthalten Dispersionen von zur Filmbildung befähigten Polyacrylaten und/oder Acrylatcopolymeren. Vorteilhaft sind auch erfindungsgemäße Fugendichtungsmassen, die auf Dispersionen von zur Filmbildung befähigten Polymeren bzw. Copolymeren ausgewählt aus der von Ethylen/Vinylacetat-, Butadien/Styrol-, Vinylacetat/Maleinsäureester-, Silikon-, Urethan-, Vinylacetatmethacrylsäure/Chloropren-und Isopren-Polymeren bzw. -Copolymeren gebildeten Gruppe beruhen. Es können unterschiedliche Polymerdispersionen kombiniert werden. Auch Polysulfiddispersionen erweisen sich in Verbindung mit zur Filmbildung befähigten Polymeren als besonders geeignet. Der Einfachheit halber wird im folgenden Text nur von Polymer-Dispersionen gesprochen.

Die meisten Bestandteile sind handelsüblich. So sind sowohl retardierte als auch nicht retardierte Celluloseether im Handel erhältlich. Unter retardierte Celluloseethern versteht man solche, die in Wasser eingebracht gegenüber den unretardierten Substanzen verzögert anquellen. Dies wird z.B. durch eine Vernetzung mit Glyoxal an der Oberfläche der Celluloseetherteilchen erreicht, wie beispielsweise in der DE 24 15 556 beschrieben ist. Während es bisher üblich war, die genannten Celluloseether bereits in wäßriger Lösung oder in solchen Mengen einzubringen, die sich in dem in dem Massen bereits enthaltenen "freien" Wasser glatt lösen lassen, kennzeichnen sich die erfindungsgemäßen Fugendichtungsmassen durch ein neues Herstellungsverfahren bezüglich des Einbringens der Celluloseether.

Die retardierten Celluloseether können in Abmischung mit den Füllstoffen eingebracht werden. Dazu werden diese beiden Bestandteile vorab innig miteinander vermengt. Es können hierbei auch gegebenen falls weitere feste Bestandteile beispielsweise Pigmente mit untergemengt werden.

In einem bevorzugten Herstellungsverfahren der erfindungsgemäßen Fugendichtungsmassen wird zu der vorgelegten Polymerdispersion Celluloseether feinverteilt mit dem Füllstoff abgemischt zugegeben und innig vermengt. Polymerdispersionen mit sehr hohem Festkörpergehalt können gegebenenfalls vorher leicht verdünnt werden. Als letztes erfolgt die Zugabe der pH-Regulatoren, wobei die weiteren Zusätze wahlweise vor und/oder nach der Zugabe des Füllstoffs untergemischt werden können.

Die in den Fugendichtungsmassen der Erfindung enthaltenen wäßrigen Dispersionen weisen bevorzugt Feststoffgehalte von 40 bis 75, insbesondere 45 bis 65 Gew.-%, auf. Ihr pH-Wert kann mindestens 6, insbesondere 7 bis 9 betragen und wird, falls erforderlich, auf diese Werte eingestellt.

Die in den erfindungsgemäßen Fugendichtungsmassen enthaltenen Celluloseether haben bevorzugt als 2%-ige wäßrige Lösung bei 20° C Viskositäten nach Brookfield von mindestens 5.000 mPas. Bevorzugt werden solche mit einem Wert von mindestens 25.000 mPas also beispielsweise mittelviskose Hydroxyethylcellulosen. Besonders geeignet sind sogenannte hochviskose Celluloseethertypen, die einen entsprechenden Wert von mindestens 70.000 mPas aufweisen z.B. hochviskose Hydroxyethylcellulose. Handelsübliche hochviskose Hydroxyethylcellulose erzielt z.B. als 2%-ige Lösung bei 20° C schon eine Viskosität von 100.000 mPas.

Gemäß den Herstellerangaben sind bei Hydroxyethylcellulose z.B. bei Natrosol 250 HHR bei einer Viskosität oberhalb von 200.000 mPas vollständige Lösungen nicht mehr zu erzielen. Bei den weniger hydrophilen, erfindungsgemäß verwendbaren Celluloseether liegt diese Grenze noch niedriger, z.B. bei Hydroxypropylcellulose bei etwa 150.000 mPas oder bei Hydroxypropylmethylcellulose bei etwa 100.000 mPas. Mit höherer Konzentration bilden sich zunehmend gelartige Massen aus. Dies scheint jedoch eine besondere Rolle bei der Frühregenfestigkeit der erfindungsgemäßen Fugendichtungsmassen zu spielen. Auch wenn die genauen Zusammenhänge nicht geklärt sind, so läßt sich doch vermuten, daß beim Übersteigen dieser Löslichkeitsgrenze ein zunehmender Aufbau einer gelartigen Struktur mit dazu beiträgt, daß die Massen auch im nicht ausgehärteten Zustand durch Wasserbelastung wie Regen nicht oder nur wenig ausgewaschen werden.

In diesem Zusammenhang kommt es offenbar auf das Verhältnis der Mengen von Celluloseether zu "freiem" Wasser an, das ausschlaggebend dafür ist, ob diese Löslichkeitsgrenze überschritten wird oder nicht. Unter "freiem" Wasser wird hier der Wassergehalt der Dichtungsmasse verstanden, der den Celluloseethern zur Verfügung steht um sich darin zu lösen. Somit kann nicht der Gesamtwassergehalt der Fugendichtungsmasse für eine entsprechende Berechnung herangezogen werden.

Vielmehr ist zu berücksichtigen, daß die anderen Bestandteile ebenfalls eine gewisse Menge Wasser beanspruchen, bzw. mehr oder weniger fest binden. So sind für die meisten Füllstoffe sogenannte Wasserwerte bekannt. Dieser beträgt beispielsweise bei Schwerspat 11 g Wasser pro 100 g Schwerspat. Für Kieselsäure z.B. für die Type HDK V 15 der Wacker-Chemie lassen sich Werte zwischen 350 bis 400 g Wasser pro 100 g Kieselsäure ermitteln. Derartige Werte bieten dem Fachmann einen Anhaltspunkt dafür, welche Mengen "gebundenen" Wassers er von dem Gesamtwassergehalt der Dichtmasse abziehen muß, um die Menge "freien" Wassers zu erhalten. Es ist es daher bevorzugt, daß diese Menge "freien" Wassers in Relation zu der Menge des jeweils eingesetzten Celluloseethertyps ein Verhältnis ergibt, das über der jeweiligen Löslichkeitsgrenze liegt.

Etwas komplizierter wird die Sachlage, wenn der Fachmann einen Wasserbedarf berücksichtigen muß, der sich ergibt, wenn die dispergierten Polymeren zur Salzbildung befähigte Gruppen enthalten. Ergibt sich ein derartiger zusätzlicher Wasserbedarf, muß der Fachmann gegebenenfalls entsprechende Herstellerangaben hinzuziehen, auf Grund von Erfahrungswerten diesen Bedarf abschätzen oder durch einfache Handversuche näherungsweise bestimmen. Soll eine Fugendichtungsmasse hergestellt werden, bei der die genannte Löslichkeitsgrenze überschritten wird, so kann die Zugabe der Celluloseether nicht wie üblich - also als Lösung - erfolgen. Mit dem erfindungsgemäßen Verfahren wird ein Weg aufgezeigt, derartige Fugendichtungsmassen herzustellen.

Weiterhin können in den Fugendichtungsmassen der Erfindung Füllstoffe in einer Menge von 2 bis 60, insbesondere 35 bis 60 Gew.-%, bezogen auf die Gesamtmasse der Fugendichtungsmassen, enthalten sein. Derartige Massen können, wenn sie nur wenig Füllstoffe enthalten, eine gewisse Transparenz aufweisen. Niedrige Füllstoffgehalte können insbesondere bei solchen Massen vorliegen bei denen die Füllstoffe einen zusätzlichen verdickenden Effekt bewirken wie Kieselsäure. Werden nur Füllstoffe eingesetzt, die diesen zusätzlichen Effekt nicht aufweisen, liegt deren Gehalt meist zwischen 35 und 60 Gew.-%. Man spricht hier von hochgefüllten Massen.

Gemäß einer weiteren vorteilhaften Ausführungsform der Erfindung enthalten die Fugendichtungsmassen als Weichmacher chlorierte Kohlenwasserstoffe, insbesondere chlorierte Paraffine, und als Netzmittel nichtionische Tenside. Bevorzugt sind handelsübliche chlorierte Paraffine mit einer Kettenlänge von etwa 10 bis 18 Kohlenstoffatomen und einem Chlorgehalt von etwa 40 bis 70 Gew.-%.

In einer bevorzugten Ausführungsform enthalten die Fugendichtungsmassen

25 - 90 Gew.-% Polymerdispersion, bei hochgefüllten Fugendichtungsmassen insbesondere

25 - 40 Gew.-% Polymerdispersion,

2 - 60 Gew.-% insbesondere 35 bis 60 Gew.-% Füllstoffe

0 - 1 Gew.-% insbesondere 0,3 bis 0,5 Gew.-% Netzmittel

0 - 20 Gew.-% insbesondere 5 bis 15 Weichmacher und

0 - 10 Gew.-% insbesondere 4 bis 6 Gew.-% weitere übliche Zusätze wie Verdickungsmittel, Entschäumer und Pigmente und

bis zu

1,5 Gew.-% Celluloseether

- Gew.-% jeweils bezogen auf die Gesamtmenge -

Dabei sollte der Celluloseethergehalt nicht viel weniger als 0,1 Gew.-% betragen. Gute Ergebnisse zeigen sich insbesondere bei Fugendichtungsmassen, bei denen unter Berücksichtigung der Rahmenparameter wie Celluloseethertyp und Gehalt an freiem Wasser der Celluloseethergehalt in einem Bereich von etwa 0,1 bis 0,5 Gew.-% bezogen auf die Gesamtmenge liegt.

Desweiteren wird bevorzugt, bei der Herstellung die Zugabe der pH-Regulatoren, insbesondere der Basen, erst nach Zugabe der Celluloseether vorzunehmen. Dies ist insbesondere bei retardierten Celluloseethern von Vorteil, da im basischen Bereich die Retardierung schneller aufgehoben wird. Andererseits kann eine neutrale bis basische Einstellung der Fugendichtungsmassen sich günstig auf deren Stabilität, insbesondere auf deren Scherstabilität, auswirken.

Zur Vermeidung des Einrührens von Luft und der Bildung von Luftblasen im Produkt kann das Rühren unter Vakuum vorgenommen werden.

Die Verwendung der Fugendichtungsmassen erfolgt vorzugsweise bestimmungsgemäß. Sie sind insbesondere für die Verwendung in Bereichen geeignet, in denen sie Spritzwasser, Regen oder sonstiger Frühwasserbelastung ausgesetzt sind.

Die Erfindung wird im folgenden anhand bevorzugter Ausführungsbeispiele näher erläutert.

**Beispiele**

Die in den Beispielen beschriebenen Massen sowie weitere, zu Vergleichszwecken hergestellte Massen wurden einem Auswaschungstest unterworfen, wobei eine Beregnungsapparatur gemäß der DE 38 14 078-A-1 Fig. 1 verwendet wurde; die gleiche Apparatur ist in Fig. 2 in Seitenansicht gezeigt.

Die Beregnungsapparatur bestand aus einem Gehäuse aus durchsichtigem Kunststoff mit den Abmessungen: Höhe 70 cm, Breite 60 cm und Tiefe 60 cm. Sie umfaßte ein Gehäuse 1, einen Brausenkopf 2, eine Probenschale 3, eine Pumpe 4, einen Bodenablauf 5 und einen Absperrhahn 6 für den Ablauf. Die Probenschale bestand aus einem Gefäß der Abmessung 7 x 7 cm und wies eine Tiefe von 2,5 cm auf. Bei dem Brausenkopf handelte es sich um eine übliche Handbrause, wie sie zur Körperpflege verwendet wird und die so eingestellt war, daß eine gleichmäßige Beregnung der Probe erfolgte. Der Abstand zwischen Probe 3 und Brausenkopf 2 betrug 30 cm.

Die Apparatur wurde mit demineralisiertem Wasser betrieben, wobei durch die Pumpe ein Überdruck von etwa 0,4 bar erzeugt wurde. Der Wasserdurchsatz betrug 300 l/h. Das Besprühen mit Wasser wurde 5 Minuten, jeweils 1 min nach dem Einfüllen und Glattstreichen der Oberfläche der zu prüfenden Massen, vorgenommen. Die Auswaschung (in Gew.-%) wurde durch Differenzwägung vor und nach dem Beregnen bestimmt.

Die Verarbeitbarkeit wurde nach DIN 52456 gemessen. Dabei wurde eine Bohrung von 4 mm, ein Druck von 2 bar und ein Prüfvolumen von 200 ml eingesetzt.

Die in den Beispielen beschriebenen Massen wurden weiterhin einem Test hinsichtlich ihres Glätteverhaltens unterzogen. Dieser Test wurde von 7 unabhängig arbeitenden Personen so durchgeführt, daß nach Auftragen eines 30 cm langen Massenstrangs auf eine glatte, ebene, dunkle Unterlage die Masse mit Spatel und Fingern geglättet wurde. Das Glätteverhalten wurde nach einer Notenskala von 1 (= sehr gut) bis 6 (= ungenügend) beurteilt.

Beispiel 1

In einem Planetenmischer wurden die folgenden Bestandteile während insgesamt etwa 30 Minuten intensiv gemischt:

1200 g handelsübliche Dispersion eines Acrylsäureestercopolymerisats mit ungefähr 55 Gew.-% Feststoff und freien Carboxygruppen Handelsname: Primal E 1785

200 g Polybuten als Extender

20 g Ethylenoxidaddukt als Netzmittel

4 g handelsübliches halogeniertes Konservierungsmittel (AKTIZID TL 526)

200 g Butylbenzylphthalat als Weichmacher

200 g Wasser

80 g aliphatisches aromatenarmes Lösungsmittel (SHELLSOL D 60)

4 g Hydroxyethylcellulose hochviskos (NATROSOL 250 HHR)

2040g ungecoatete Kreide

40 g Titandioxid und

12 g 25%-ige wäßrige Ammoniaklösung

Verarbeitbarkeit nach DIN 52456: 1000 g/min
Glättverhalten: gut
Auswaschung: 4,3 % Verlust

Dabei wurde wie folgt verfahren, daß die Dispersion vorgelegt wurde, dann das Polybuten, das Ethylenoxidaddukt, das Konservierungsmittel, der Weichmacher und das Wasser sowie das Lösungsmittel ca. 5 Minuten innig miteinander vermischt wurden. Anschließend wurde die Kreide und das Titandioxid mit der Hydroxyethylcellulose vermischt und in den Ansatz eingearbeitet. Es wurde 10 Minuten nachgerührt. Nach Zugabe des Ammoniaks wurde nochmals 15 Minuten unter Vakuum bei 40 mbar glattgerührt.

Beispiel 2

In einem Planetenmischer wurden die folgenden Bestandteile während insgesamt etwa 45 Minuten intensiv gemischt:
1750 g wäßrige, handelsübliche Polybutylacrylesterdispersion (ungefähr 62 % Feststoff), einem pH-Wert von 6,0 - 6,5, einer Glasübergangstemperatur Tg -50 °C, einer Viskosität von etwa 250 mPas bei 23 °C und einer mittleren Teilchengröße von 0,4 μm,
250 g Chlorparaffin ($C_{12}$-$C_{14}$, 49 % Chlor),
2800 g Bariumsulfat (Handelsprodukt: Schwerspat EWO),
100 g Titandioxid (Handelsprodukt KRONOS RN 56),
25 g Natriumcarbonat (techn. reine Handelsware),
25 g Ethylenoxidaddukt (ungefähr 9,5 EO) an Nonylphenol,
5 g handelsübliches halogeniertes Konservierungsmittel,
37 g Hydroxyethylcellulose mit einer Viskosität von etwa 4000 mPas einer 1 %-igen, wäßrigen Lösung bei 20 °C und einem Hydroxyethylgruppengehalt von 55 Gew.-%, Handelsname: Natrosol 250 HHR.

Dabei wurde so vorgegangen, daß zunächst die Polymerdispersion vorgelegt wurde. Es wurde dann das Ethylenoxidaddukt (Emulgator), das Konservierungsmittel sowie das Chlorparaffin hinzugeben. Anschließend wurde die Hydroxyethylcellulose zusammen mit dem Bariumsulfat (Füllstoff) und dem Titandioxid innig vermengt und in dieser Form dem Ansatz untergemischt. Nach Zugabe des Natriumcarbonats als 10 %-ige wäßrige Lösung erfolgte nochmals inniges Durchmischen unter Vakuum.
Verarbeitbarkeit nach DIN 52456: 2260 g/min
Glättverhalten: gut
Auswaschung: 1 % Verlust

Bei einem Zusatz von insgesamt 50 g derselben Hydroxyethylcellulose wurden folgende Ergebnisse gefunden:

Verarbeitbarkeit nach DIN 52456: 1300 g/min
Glättverhalten: sehr gut
Auswaschung: 0,3 % Verlust

Beispiel 3

In einem Planetenmischer wurden die folgenden Bestandteile während insgesamt etwa 40 Minuten intensiv gemischt:
1400 g wäßrige, handelsübliche Polybutylacrylesterdispersion (ungefähr 62 % Festkörper), einem pH-Wert von 6,0 - 6,5, einer Glasübergangstemperatur Tg -50 °C, einer Viskosität von etwa 250 mPas bei 23 °C und einer mittleren Teilchengröße von 0,4 μm,
200 g Polybuten
12 g Ethylenoxidaddukt (ungefähr 9,5 EO) an Nonylphenol,
8 g handelsübliches halogeniertes Konservierungsmittel,
10 g Natriumcarbonat (technisch reine Handelsware)
146 g Leitungswasser
20 g Hydroxyethylcellulose mit einer Viskosität von etwa 4000 mPas einer 1 %-igen, wäßrigen Lösung bei 20 °C und einem Hydroxyethylgruppengehalt von 55 Gew.-%, Handelsname: Natrosol 250 HHR
80 g Titandioxid
1008 g Bariumsulfat (Schwerspat EWO)
1096 g Calciumcarbonat (Omega BLP 3)
20 g Kohlenwasserstoffe (mit einem KP von 180 °C - 210 °C wie Kristallöl 60)
Verarbeitbarkeit nach DIN 52456: 2830 g/min
Glättverhalten: gut
Auswaschung: 1, 7 % Verlust

Dabei wurde so vorgegangen, daß zunächst die Polymerdispersion vorgelegt wurde. Es wurden dann das Ethylenoxidaddukt (Emulgator), das Konservierungsmittel, das Polybuten und das Kristallöl innig miteinander vermischt. Anschließend wurde die Kreide, das Titandioxid und das Bariumsulfat mit der Hydroxyethylcellulose vermischt und in den Ansatz eingearbeitet. Es wurde ca. 10 Minuten gerührt. Nach Zugabe des Natriumcarbonats - gelöst in Wasser - wurde nochmals 15 Minuten unter Vakuum glattgerührt.

Ansprüche

1. Frühregenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe

- Füllstoffe sowie
- gegebenenfalls übliche Zusätze wie Pigmente, Weichmacher, Extender, Verdickungsmittel, Entschäumer, Dispergierhilfsmittel, pH-Regulatoren sowie Konservierungs- und Alterungsschutzmittel

und herstellbar durch inniges Vermengen von (I) mit den übrigen Bestandteilen, dadurch gekennzeichnet, daß (II) in retardierter Form abgemischt mit den Füllstoffen zugegeben und untergemischt wird.

2. Fugendichtungsmassen nach Anspruch 1, dadurch gekennzeichnet, daß sie Dispersionen von zur Filmbildung befähigten Polyacrylaten und/oder Acrylatcopolymeren enthalten.

3. Fugendichtungsmassen nach Anspruch 1, dadurch gekennzeichnet, daß sie Dispersionen von zur Filmbildung befähigten Polymeren bzw. Copolymeren ausgewählt aus der von Ethylen/Vinylacetat-, Butadien/Styrol-, Vinylacetat/Maleinsäureester-, Silikon-, Urethan-, Vinylacetatmethacrylsäure/Chloropren- und Isopren-Polymeren bzw. -Copolymeren gebildeten Gruppe enthält.

4. Fugendichtungsmassen nach einem der vorstehenden Ansprüche, dadurch gekennzeichnet, daß sie eine wäßrige Dispersion von Polysulfidpolymeren enthalten.

5. Fugendichtungsmassen nach einem der vorstehenden Ansprüche, dadurch gekennzeichnet, daß die wäßrigen Polymer- bzw. Copolymerdispersionen Feststoffgehalte von 40 bis 75 Gew.-%, insbesondere von von 45 bis 65 Gew.-% aufweisen.

6. Fugendichtungsmassen nach einem der vorstehenden Ansprüche, dadurch gekennzeichnet, daß Celluloseether enthalten sind, die in 2%-iger wäßriger Lösung bei 20°C Viskositäten nach Brookfield von mindestens 5000, insbesondere mindestens 25.000, vorzugsweise mindestens 70.000 mPas aufweisen.

7. Fugendichtungsmassen nach einem der vorstehenden Ansprüche, dadurch gekennzeichnet, daß das Verhältnis von Celluloseethern zu freiem Wasser so gewählt ist, daß eine vollständige Lösung der Celluloseether nicht mehr zu erzielen ist.

8. Fugendichtungsmassen nach einem der vorstehenden Ansprüche, dadurch gekennzeichnet, daß sie

25 - 90 Gew.-% Polymerdispersion, bei hochgefüllten Fugendichtungsmassen insbesondere

25 - 40 Gew.-% Polymerdispersion,

2 - 60 Gew.-% insbesondere 35 bis 60 Gew.-% Füllstoffe

0 - 1 Gew.-% insbesondere 0,3 bis 0,5 Gew.-% Netzmittel

0 - 20 Gew.-% insbesondere 5 bis 15 Weichmacher und

0 - 10 Gew.-% insbesondere 4 bis 6 Gew.-% weitere übliche Zusätze wie Verdickungsmittel, Entschäumer und Pigmente und

bis zu

1,5 Gew.-% Celluloseether

- Gew.-% jeweils bezogen auf die Gesamtmenge - enthalten.

9. Verfahren zur Herstellung von Fugendichtungsmassen, dadurch gekennzeichnet, daß zu der vorgelegten Polymerdispersion die im Füllstoff feinverteilten Celluloseether zugegeben und innig vermischt werden, anschließend die pH-Regulatoren - insbesondere Basen - zugegeben werden und die Untermischung der weiteren üblichen Zusätze wahlweise vor und/oder nach der Zugabe des Füllstoffs erfolgt.

10. Verwendung der Fugendichtungsmassen als solche insbesondere in Bereichen, in denen die Fugendichtungsmassen Spritzwasser oder Regen ausgesetzt sein können.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,D,A | EP-A-0 339 427 (HENKEL KGAA)<br>* Anspruch 1 *<br><br>— — — — — | 1 | C 09<br>D 5/34<br>C 08 J 3/00 |

| | RECHERCHIERTE SACHGEBIETE (Int. Cl.5) |
|---|---|
| | C 09 D<br>C 08 J<br>C 09 K<br>C<br>08 L |

Der vorliegende Recherchenbericht wurde für alle Patentansprüche erstellt

| Recherchenort | Abschlußdatum der Recherche | Prüfer |
|---|---|---|
| Den Haag | 14 Januar 91 | SCHUELER D.H.H. |